# EUROPEAN PATENT SPECIFICATION

(11) **EP 1 857 984 B1**
(45) Date of publication and mention of the grant of the patent: **01.04.2009**
(21) Application number: 07251837.6
(22) Date of filing: 01.05.2007
(51) Int. Cl.: G07D 7/00

(54) **Methods of processing a check in an image-based check processing system to determine if the check is potentially fraudulent**
Verfahren zur Bearbeitung eines Schecks in einem bildbasierten Scheckverarbeitungssystem zur Erkennung in betrügerischer Absicht ausgestellter Schecks
Procédés de traitement d'un chèque dans un système de traitement de chèques basé sur l'image afin de déterminer si le chèque est potentiellement frauduleux

(30) Priority: 16.05.2006 US 434681
(43) Date of publication of application: 21.11.2007
(73) Proprietor: NCR Corporation, Dayton, Ohio 45479 (US)
(72) Inventor: Franklin, Lianne C., Waterloo Ontario N2K 3RI (CA)
(74) Representative: MacLeod, Roderick William

(56) References cited:
- WO-A-03/069425
- WO-A-20/05043477
- US-B1- 6 554 185

## Description

The present invention relates to processing checks in an image-based check processing system, and is particularly directed to methods of processing a check in an image-based check processing system to determine if the check is potentially fraudulent.

A typical image-based check processing system includes a check processing transport which has a document track and a number of check processing modules positioned along the document track for performing specific document processing operations on document items including checks moving downstream along the document track. The check processing system also includes a transport processor which executes a transport application program which is stored in memory to control operation of devices contained within the check processing modules positioned along the document track and thereby to control operation of the check processing transport.

A typical check processing transport includes a hopper into which a stack of document items is placed. An operator initially prepares the document items (e.g., orienting document items properly, removing staples, removing paper clips, straightening bent corners, and the like) before they are placed into the hopper. A document feeder adjacent the hopper selectively feeds or drives each document item from the stack of document items in the hopper to transport the document item from the upstream end to the downstream end along the document track past an image capture device and a magnetic ink character recognition (MICR) reader. The image capture device captures an image of the front of the document item and an image of the back of the document item. The MICR reader reads a codeline from each document item. The document items are eventually transported to sorting pockets of a pocket device located at the downstream end of the document track. The pockets receive document items which have been sorted based upon the particular transport application program.

From time to time, a document item is transported to a pocket designated as a "reject" pocket. Document items transported to the reject pocket may include fraudulent checks. Any fraudulent check in the reject pocket is mixed in with other document items including non-fraudulent checks. Since fraudulent checks are mixed together with non-fraudulent checks in the reject pocket, it is difficult for a human operator to quickly identify such fraudulent checks. The operator would need to sort through all checks from the reject pocket, and then examine each check to determine if it is fraudulent. It would be desirable for the operator to be able to more quickly identify any checks which may be fraudulent.

Document WO2005/043477 discloses a method for processing checks where the MICR codeline and an image of the check are taken and stored when the check is handed out at the point of service when delivered at the back-office checks are rescanned and their MICR codelines and images are compared to the stored ones.

In accordance with an embodiment of the present invention, a method of processing a check in an image-based check processing system to determine if the check is potentially fraudulent comprises attempting to read a magnetic ink character recognition (MICR) codeline of a physical check as the check is transported along a document track, capturing image data which is representative of an image of the check as the physical check is transported along the document track, attempting to read a MICR codeline from the image of the check, and transporting the physical check to a fraud suspect pocket which is other than a reject pocket when a MICR codeline of mostly blanks is read from the physical check and a MICR codeline of mostly non-blanks is read from the image of the check.

Embodiments of the present invention will now be described, by way of example, with reference to the accompanying drawings, in which:
Fig. 1 is a schematic block representation of an image-based check processing system embodying the present invention;
Fig. 2 is a detailed view of different types of pockets of a pocket device shown in the image-based check processing system of Fig. 1; and
Figs. 3A and 3B is a flowchart depicting operation of the image-based check processing system of Fig. 1.

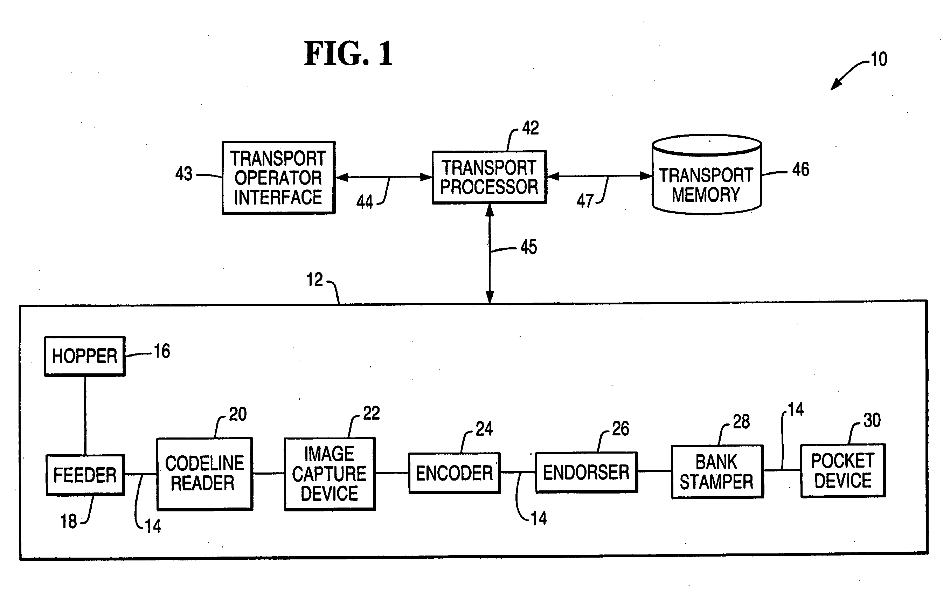

The present invention is directed to methods of processing a check in an image-based check processing system, such as shown in Fig. 1, and designated with reference numeral 10, to determine if the check is potentially fraudulent. The specific construction and use of the image-based check processing system 10 may vary. The check processing system 10 may be, for example, a sorting machine or a proof machine wherein financial document items are processed in a bank. The financial document items may be in any number of forms. For examples, a financial document item may be in the form of a check, a deposit slip, a cash-in slip, or a cash-out slip.

The check processing system 10 includes a check processing transport 12 having a document track 14 along which financial document items, such as checks, can be transported from an upstream end to a downstream end. The transport 12 includes a number of different check processing modules positioned along the document track 14. Each check processing module includes a number of devices associated with the particular check processing module for performing specific document processing operations on document items moving along the document track. The transport 12 includes a hopper 16 into which a stack of financial document items including checks are placed. A document feeder 18 adjacent the hopper 16 selectively feeds or drives each document item from the stack of document items in the hopper to transport the document item from the upstream end to the downstream end along the document track 14.

The check processing system 10 also includes a codeline reader 20 such as a magnetic ink character recognition (MICR) reader located along the document track 14. The MICR reader 20 reads a MICR codeline from each check being processed in a known manner. The check processing system 10 further includes an image capture device 22 located along the document track 14. The image capture device 22 captures images of the front and rear of each document item for a number of different purposes well known in the financial industry. More specifically, the image capture device 22 includes a front imaging camera and a rear imaging camera (both not shown) which are controlled to capture images of document items moving along the document track 14. The structure and operation of MICR readers, OCR readers, and imaging cameras are well known and, therefore, will not be described.

The check processing system 10 may optionally include an encoder 24, an endorser 26, or a bank stamper 28, as shown in Fig. 1. The encoder 24 encodes missing fields on each check. The endorser 26 applies an endorsement in a known manner to each check. The bank stamper 28 stamps each check to identify the bank institution processing the check. The structure and operation of encoders, endorsers, and bank stampers are well known and, therefore, will not be described.

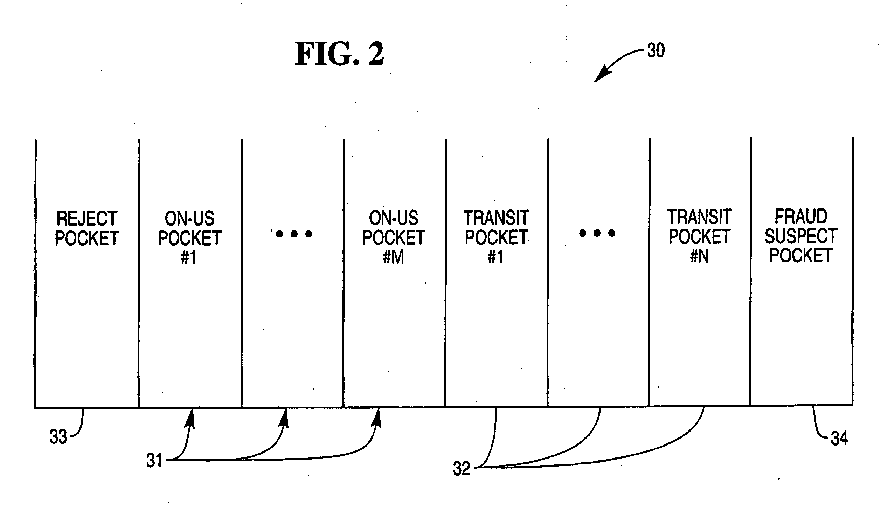

Referring to Figs. 1 and 2, the pocket device 30 includes a number of different types of pockets into which document items are pocketed. Four types of pockets are shown in Fig. 2. The four types of pockets include on-us pockets 31, transit pockets 32, a reject pocket 33, and a fraud suspect pocket 34. By way of example, there are "M" number of on-us pockets, "N" number of transit pockets, one reject pocket, and one fraud suspect pocket shown in Fig. 2. The construction of the pockets 31, 32, 33, 34 in the pocket device 30 is well known and, therefore, will not be described. The functionality of the on-us pockets 31, the functionality of the transit pockets 32, and the functionality of the reject pocket 33 are well known and, therefore, will not be described. The functionality of the fraud suspect pocket 34 will be described later.

The check processing system 10 further includes a transport processor 42 and a transport operator interface 43 which communicates via signals on line 44 with the transport processor. The operator interface 43 may include a keyboard, a mouse, and a display, all of which communicate via signals with the transport processor 42. The transport processor 42 controls operation of the transport 12 via signals on line 45. Suitable processors and memories are readily available in the marketplace. Their structure and operation are well known and, therefore, will not be described.

The check processing system 10 also includes a transport memory 46 which communicates via signals on line 47 with the transport processor 42. The memory 46 may comprise a single memory unit or a plurality of different memory units. An executable transport application program is stored in the memory 46. The transport application program is associated with a particular type of document processing work. For example, one type of work is proof of deposit. Another type of work is remittance processing. Still another type of work may be sorting of document items.

When the transport application program is executed, the devices contained within the check processing modules lying along the document track 14 are controlled to process document items moving downstream along the document track in accordance with the transport application program, as is known. The memory 46 may store sequence numbers, MICR codelines, and image data associated with document items which have been processed in accordance with the transport application program. If applicable, the memory may also store encoder status, endorsement status, or bank stamp status.

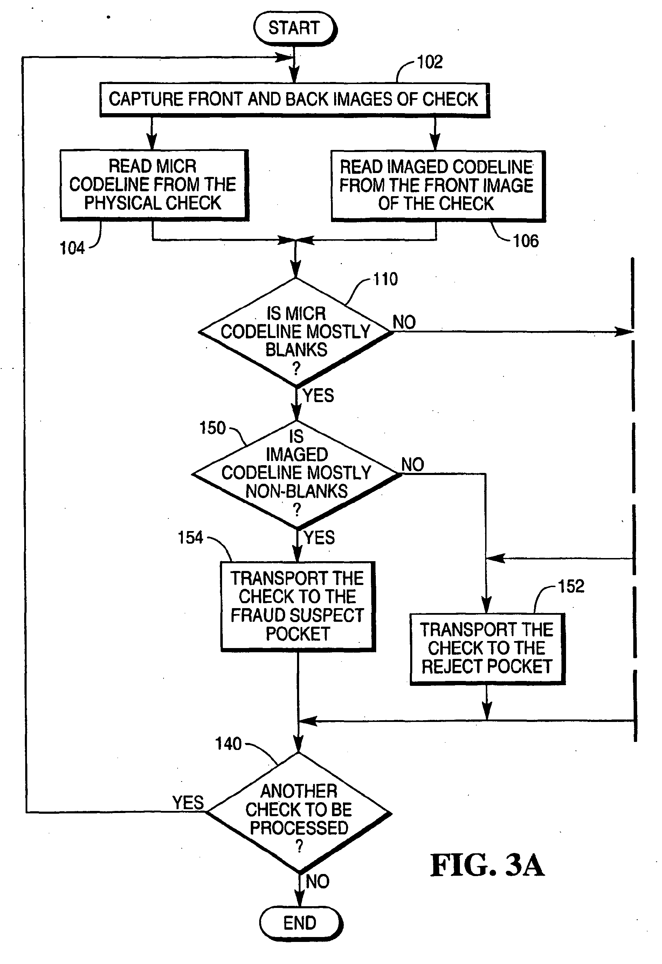

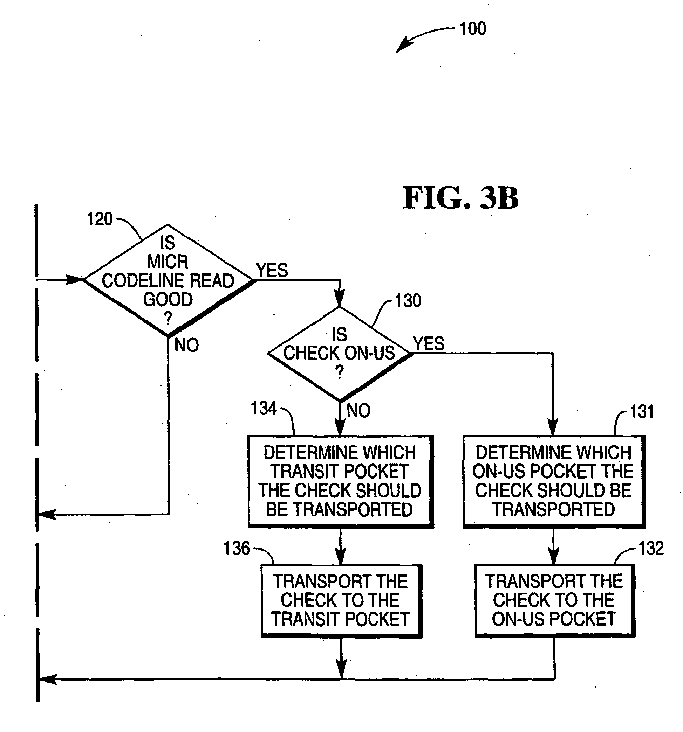

Referring to Figs. 3A and 3B, a flowchart 100 depicts operation of the image-based check processing system 10 of Fig. 1. As a physical check is transported along the document track 14 past the image capture device 22, the front and the back of the check are imaged (step 102). The MICR reader 20 makes an attempt to read a MICR codeline from the physical check as the check is transported past the MICR reader (step 104). At the same time that the MICR reader 20 is making an attempt to read a MICR codeline from the check, an attempt is made to read a MICR codeline from the front image of the check (step 106).

The attempted read of step 104 is performed in parallel with the attempted read of step 106. Typically, two processors are needed in the check processing system 10 to accomplish this parallel processing. The attempted read of step 106 may be implemented via either software or hardware. For example, if a read attempt is implemented in software, such a read attempt may be in the form of a multi-line OCR read from the image. It should be noted that the process of reading a codeline from an image is sometimes referred to as "multi-line OCR", as is known.

A determination is made (step 110) as to whether the read of a MICR codeline from the physical check in step 104 is mostly blanks. For example, the codeline reader 20 reads a mostly blank codeline when the physical check has been pre-printed with various fields (except for the amount) with non-magnetic ink, and has been subsequently processed by a financial institution which encoded the amount with magnetic ink. In this example, if the amount was not encoded with magnetic ink, then the codeline reader 20 would read a completely blank codeline.

As another example, the codeline reader 20 reads a mostly blank codeline when an odd reject character is read from the physical check. This odd reject character may have been generated from bits of magnetic ink on the physical check. It is conceivable that bits of magnetic ink may even generate a non-reject character. In either case, the codeline reader 20 would read a mostly blank codeline. It should be noted that if a mostly blank codeline has been read by the codeline reader 20, this would be an indication that the codeline on the physical check may have been printed with a printer using non-magnetic ink and, as such, would make the check a fraudulent check.

If the determination in step 110 is negative (i.e., the MICR codeline read from the physical check is not mostly blanks), a determination is made (step 120) as to whether the read of the MICR codeline from the physical check of step 104 is of sufficient quality to constitute a good read. If the determination in step 120 is affirmative, a determination is made (step 130) as to whether the check being processed is an on-us item. If the determination in step 130 is affirmative, a determination is made (step 131) as to which one of the on-us pockets 31 (Fig. 2) the check should be transported and pocketed. After the determination in step 131 is made, the physical check is transported along the document track 14 to the particular one of the on-us pockets 31 (step 132). A determination is then made (step 140) as to whether there is another check to be processed. If the determination in step 140 is affirmative, the program returns to step 102 to process the next check. Otherwise, the program ends.

However, if the determination in step 130 is negative (i.e., the check is not an on-us item), a determination is made (step 134) as to which one of the transit pockets 32 (Fig. 2) the check should be transported and pocketed. After the determination in step 134 is made, the physical check is transported along the document track 14 to the particular one of the transit pockets 32 (step 136). A determination is then made (step 140) as to whether there is another check to be processed. If the determination in step 140 is affirmative, the program returns to step 102 to process the next check. Otherwise, the program ends.

However, if the determination in step 120 is negative (i.e., the MICR codeline read from the physical check is not of sufficient quality to constitute a good read), the physical check is transported along the document track 14 into the reject pocket 33 (Fig. 2) as shown in step 152. A determination is then made (step 140) as to whether there is another check to be processed. If the determination in step 140 is affirmative, the program returns to step 102 to process the next check. Otherwise, the program ends.

However, if the determination in step 110 is affirmative (i.e., the MICR codeline read from the physical check does contain mostly blanks and, therefore, may have been fraudulently produced), a determination is made (step 150) as to whether the read of a MICR codeline from the check image of step 106 is mostly non-blanks. If the determination in step 150 is negative (i.e., the MICR codeline read from the check image is also mostly blanks), the physical check is transported along the document track 14 and pocketed into the reject pocket 33 (Fig. 2) as shown in step 152. It should be noted that if the MICR codeline read from the physical check is mostly blanks and the MICR codeline read from the check image is also mostly blanks, then the chances are more likely that the MICR codeline on the physical check is of insufficient quality for a reason other than because it has been fraudulently produced. Since the check is unlikely to be fraudulent, the physical check is transported and pocketed in the reject pocket 33. A determination is then made (step 140) as to whether there is another check to be processed. If the determination in step 140 is affirmative, the program returns to step 102 to process the next check. Otherwise, the program ends.

However, if the determination in step 150 is affirmative (i.e., the MICR codeline read from the check image is mostly non-blanks), the physical check is transported along the document track 14 and pocketed into the fraud suspect pocket 34 (Fig. 2) as shown in step 154. It should be noted that if the MICR codeline read from the physical check is mostly blanks and the MICR codeline read from the check image is mostly non-blanks, then the chances are more likely that the MICR codeline on the physical check has been fraudulently produced. Since chances are more likely that the MICR codeline has been fraudulently produced, the potentially fraudulent check is transported and pocketed in the fraud suspect pocket 34 which is separate from the reject pocket 33. A determination is then made (step 140) as to whether there is another check to be processed. If the determination in step 140 is affirmative, the program returns to step 102 to process the next check. Otherwise, the program ends.

It should be apparent that a physical check being transported along the document track 14 is not diverted into the reject pocket 33 when the check is identified as being potentially fraudulent. The potentially fraudulent check is transported into the fraud suspect pocket 34 (i.e., a pocket which is not one of the on-us pockets 31, not one of the transit pockets 32, and not the reject pocket 33). Accordingly, a human operator can more quickly sort through the physical checks contained in the fraud suspect pocket 34, and thereby more quickly identify and flag actual fraudulent checks. Fraudulent checks can then be more quickly traced back to the depositor of the check. Since actual fraudulent checks are more quickly identified, flagged, outsorted, and returned to their originator (such as a collecting bank), losses to the present financial institution processing the fraudulent checks (which is a paying bank) should be reduced.

It should also be apparent that a pocketing decision is being made as a physical check is moving along the document track 14 towards the downstream end in the pocketing area of the pocket device 30. The pocketing decision must be made before the physical check reaches the pocketing area. Accordingly, there is a time limit (typically in numbers of milliseconds) in making a pocketing decision. If the pocketing decision cannot be made within this time limit, the check must be diverted and transported to the reject pocket 33.

Although the above description describes the pocket 34 as having the name "fraud suspect pocket", it is conceivable that this pocket may have a different name. Whatever the name of the pocket 34, the function of this pocket is to receive physical checks which have been identified and flagged as being potentially fraudulent. Such potentially fraudulent checks are pocketed into this pocket (i.e., pocket 34) and not the reject pocket 33 which is physically and functionally different from the pocket 34. By pocketing a physical check into the pocket 34 and not the reject pocket 33, an indication of the check being potentially fraudulent is provided and not "lost" as would have been the case if the check was pocketed into the reject pocket 33.

Also, although the above description describes step 110 as making a determination as to whether the MICR codeline read by the codeline reader 20 is "mostly blanks", it is conceivable that this determination be made as to whether the MICR codeline is "all blanks". As in an example described hereinabove, the MICR codeline read by the codeline reader 20 would be "all blanks" when the check amount has not yet been encoded on the physical check.

Moreover, although the above description describes step 150 as making a determination as to whether the MICR codeline read from the check image is "mostly non-blanks", it is conceivable that this determination be made as to whether the MICR codeline is "all non-blanks".

Also, although the above description describes multiple processors (i.e., more than one processor) as being needed to perform the attempted read of step 104 in parallel with the attempted read of step 106, it is conceivable that only one processor be used if the single processor is sufficiently fast enough to make a pocketing decision before the check reaches the pocketing area of the pocket device 30.

## Claims

1. A method of processing a check in an image-based check processing system to determine if the check is potentially fraudulent, the method comprising:
attempting to read a magnetic ink character recognition (MICR) codeline of a physical check as the check is transported along a document track;
capturing image data which is representative of an image of the check as the physical check is transported along the document track;
attempting to read a MICR codeline from the image of the check; and
transporting the physical check to a fraud suspect pocket which is other than a reject pocket when a MICR codeline of mostly blanks is read from the physical check and a MICR codeline of mostly non-blanks is read from the image of the check.

2. A method according to claim 1, further comprising transporting the physical check to the reject pocket when a MICR codeline of mostly non-blanks is not read from the image of the check.

3. A method according to claim 2, further comprising transporting the physical check to a transit pocket when a MICR codeline of mostly blanks is not read from the physical check and the MICR codeline read from the physical check is of sufficient quality.

4. A method according to any preceding claim, further comprising transporting the physical check to an on-us pocket when a MICR codeline of mostly blanks is not read from the physical check and the MICR codeline read from the physical check is of sufficient quality.

5. A method according to any preceding claim, wherein the MICR codeline of sufficient quality read from the image of the check comprises a mostly non-blank MICR codeline.

6. A method according to claim 5, further comprising transporting the physical check to either a transit pocket or an on-us pocket when a MICR codeline of mostly blanks is not read from the physical check and the MICR codeline read from the physical check is of sufficient quality.

## Patentansprüche

1. Verfahren zum Verarbeiten eines Schecks in einem bildbasierten Scheckverarbeitungssystem zur Bestimmung, ob der Scheck möglicherweise betrügerisch ist, wobei das Verfahren umfasst:
Versuch des Lesens einer Magnetic-Ink-Character-Recognition (MICR)-Befehlszeile eines physischen Schecks, wenn der Scheck entlang einer Dokumentenbahn transportiert wird;
Erfassen von Bilddaten, welche ein Bild auf dem Scheck repräsentieren, wenn der physische Scheck entlang der Dokumentenbahn transportiert wird;
Versuch des Lesens einer MICR-Befehlszeile von dem Bild des Schecks; und
Transportieren des physischen Schecks zu einer betrugsverdächtigen Ablage, die eine andere ist als eine Zurückweisungsablage, wenn eine MICR-Befehlszeile von hauptsächlich Leerzeichen von dem physikalischen Scheck gelesen wird und wenn eine MICR-Befehlszeile von größtenteils Nicht-Leerzeichen von dem Bild des Schecks gelesen wird.

2. Verfahren gemäß Anspruch 1, weiterhin umfassend das Transportieren des physischen Schecks zu der Zurückweisungsablage, wenn keine MICR-Befehlszeile von größtenteils Nicht-Leerzeichen von dem Bild des Schecks gelesen wird.

3. Verfahren gemäß Anspruch 2, weiterhin umfassend das Transportieren des physischen Schecks zu einer Durchgangsablage, wenn keine MICR-Befehlszeile von größtenteils Leerzeichen von dem physischen Scheck gelesen wird und die von dem physischen Scheck gelesene MICR-Befehlszeile von ausreichender Qualität ist.

4. Verfahren gemäß einem vorangehenden Anspruch, weiterhin umfassend das Transportieren des physischen Schecks zu einer "auf uns"-Ablage, wenn keine MICR-Befehlszeile von größtenteils Leerzeichen von dem physischen Scheck gelesen wird und die von dem physischen Scheck gelesene MICR-Befehlszeile von ausreichender Qualität ist.

5. Verfahren gemäß einem vorangehenden Anspruch, wobei die von dem Bild des Schecks gelesene MICR-Befehlszeile von ausreichender Qualität größtenteils eine Nicht-Leerzeichen-MICR-Befehlszeile aufweist.

6. Verfahren gemäß Anspruch 5, weiterhin umfassend das Transportieren des physischen Schecks entweder zu einer Durchgangsablage oder zu einer "auf uns"-Ablage, wenn keine MICR-Befehlszeile mit größtenteils Leerzeichen von dem physischen Scheck gelesen wird und die von dem physischen Scheck gelesene MICR-Befehlszeile von ausreichender Qualität ist.

## Revendications

1. Procédé de traitement d'un chèque dans un système de traitement de chèque basé sur l'image pour déterminer si le chèque est potentiellement frauduleux, procédé dans lequel :
on essaie de lire une ligne de code de reconnaissance de caractères à l'encre magnétique (MICR) d'un chèque physique alors que le chèque est transporté le long d'une piste de document ;
on capture des données d'images, qui sont représentatives d'une image du chèque alors que le chèque physique est transporté le long de la piste de document;
on essaie de lire une ligne de code MICR à partir de l'image du chèque ; et
on transporte le chèque physique à une poche de suspection de fraude qui est autre qu'une poche de rejet lorsqu'une ligne de code MICR de blancs pour la plupart est lue à partir du chèque physique et une ligne de code MICR de non blancs pour la plupart est lue à partir de l'image du chèque.

2. Procédé suivant la revendication 1, dans lequel, en outre, on transporte le chèque physique à la poche de rejet lorsqu'une ligne de code MICR de non blancs pour la plupart n'est pas lue à partir de l'image du chèque.

3. Procédé suivant la revendication 2, dans lequel, en outre, on transporte le chèque physique à une poche de transit lorsqu'une ligne de code MICR de blancs pour la plupart n'est pas lue à partir du chèque physique et lorsque la ligne de code MICR lue à partir du chèque physique est d'une qualité suffisante.

4. Procédé suivant l'une quelconque des revendications précédentes, dans lequel, en outre, on transporte le chèque physique à une poche sur nous lorsqu'une ligne de code MICR de blancs pour la plus grande partie n'est pas lue à partir du chèque physique et lorsque la ligne de code MICR lue à partir du chèque physique est d'une qualité suffisante.

5. Procédé suivant l'une quelconque des revendications précédentes, dans lequel la ligne de code MICR de qualité suffisante lue à partir de l'image du chèque comprend une ligne de code MICR de non blancs pour la plus grande partie.

6. Procédé suivant la revendication 5, dans lequel, en outre, on transporte le chèque physique à une poche de transit ou à une poche sur nous lorsqu'une ligne de code MICR de blanc pour la plus grande partie n'est pas lue à partir du chèque physique et lorsque la ligne de code MICR lue à partir du chèque physique est d'une qualité suffisante.
